# EUROPÄISCHE PATENTSCHRIFT

(11) **EP 4 363 497 B1**
(45) Veröffentlichungstag und Bekanntmachung des Hinweises auf die Patenterteilung: **16.04.2025**
(21) Anmeldenummer: 22735888.4
(22) Anmeldetag: 23.06.2022
(51) Int. Cl.: C08K 5/053, C08K 5/3492, C08K 5/523, C08K 5/5317, H01B 3/00, H01B 17/62, H01B 3/30

(54) **FLAMMGESCHÜTZTE POLYAMID-FORMMASSEN FÜR DIE ISOLATION VON ELEKTRISCHEN BAUTEILEN**
FLAMEPROOF POLYAMIDE MOLDING COMPOUNDS FOR INSULATING ELECTRIC COMPONENTS
MATIÈRES À MOULER À BASE DE POLYAMIDE IGNIFUGÉES POUR L'ISOLATION DE COMPOSANTS ÉLECTRIQUES

(30) Priorität: 29.06.2021 EP 21182247
(43) Veröffentlichungstag der Anmeldung: 08.05.2024
(73) Patentinhaber: Evonik Operations GmbH, 45128 Essen (DE)
(72) Erfinder: MERKULOV, Alexey, 45770 Marl (DE); RESING, Mario, 48703 Stadtlohn (DE); FRANOSCH, Jürgen, 45770 Marl (DE); RUBAN, Eckart, 71032 Böblingen (DE); SZENTIVANYI, Andreas, 45134 Essen (DE); PHAM, Duy Vu, 46149 Oberhausen (DE)
(74) Vertreter: Evonik Patent Association
(86) Internationale Anmeldenummer: PCT/EP2022/067108
(87) Internationale Veröffentlichungsnummer: WO 2023/274820

(56) Entgegenhaltungen:
- EP-A1- 1 731 559
- WO-A1-2017/015338
- WO-A1-93/18914
- JP-A- 2005 162 912
- DATABASE CA [online] CHEMICAL ABSTRACTS SERVICE, COLUMBUS, OHIO, US; 24 June 2005 (2005-06-24), HARASHINA, HATSUHIKO: "Fire-resistant resin compositions with good processing stability", XP002804873, retrieved from STN Database accession no. 2005:545699

## Beschreibung

Die vorliegende Erfindung betrifft flammgeschützte Polyamid-Formmassen mit einem niedrigen Phosphorgehalt.

EP 150511 A1 offenbart pulverförmige Polyamid Zusammensetzungen enthaltend ein Alkylphospohonat in der Anwendung zum 3D Druck.

EP 3127937 A1 zeigt die Wirksamkeit von Metallphophinaten zur Flammschutzausrüstung von Polyamiden. Laut der verbalen Auswertung der Beispiele sollte vom Zusatz von Melamincyanurat abgesehen werden.

In EP 1731559 A1 wird eine Phopshorverbindung in Kombination mit Melamincyanurat und einem Alkohol als Flammschutz für Polyamid vorgeschlagen. Diese erreichen eine Klassifizierung nach UL 94 von V-0, jedoch zeigen die Vergleichsversuche der vorliegenden Erfindung einen erhöhten Masseverlust durch Migration. Weder dieser Masseverlust noch die Bruchdehnung der Zusammensetzungen wurden in EP 1731559 A1 berücksichtigt.

In US 2018/003771 A1 wird empfohlen Polyamide ausschließlich mit Melamincyanurat und einem Polyol flammgeschützt auszurüsten. Mechanische Anforderungen werden nicht offenbart.

Aufgabe der vorliegenden Erfindung war es Polyamid-Formmassen zur Verfügung zu stellen, die mit einem niedrigen Phosphorgehalt sehr gut flammgeschützt sind und nur einen sehr geringen Masseverlust bei hohen Temperaturen erleiden, dabei sollen sich die Formmassen durch eine hohe Bruchdehnung auszeichnen.

Überraschend wurde festgestellt, dass Flammschutzmittel mit niedrigem Gehalt an phosphorhaltigen Verbindungen für Polyamid-Formmassen mit Vorteil eingesetzt werden können.

Gegenstand der vorliegenden Erfindung ist eine Polyamid-Formmasse enthaltend:
(A) eine Polyamidmatrix enthaltend ein oder mehrere Polyamide mit mindestens 8 Kohlenstoffen pro Amideinheit
(B) eine Flammschutzmittelzusammensetzung, enthaltend:
   (B1) wenigstens einem metallfreien Arylphosphat;
   (B2) wenigstens einem Arylphosphonat;
   (B3) einem Carbo-Polyalkohol;
   (B4) Melamincyanurat;
   (B5) optional, nicht phosphorhaltige Flammschutzmittel,
wobei der Gehalt an Phosphor aus der gesamten Flammschutzmittelzusammensetzung 0,5 bis 1,5 Gew.-%, bevorzugt 0,75 bis 1,25 Gew.-% bezogen auf die Polyamid-Formmasse beträgt.

Ein weiterer Gegenstand der vorliegenden Erfindung ist die Verwendung der erfindungsgemäßen Polyamid-Formmasse zur Herstellung eines Bauteiles.

Ein weiterer Gegenstand der vorliegenden Erfindung ist ein Verfahren zur Isolierung von stromführenden Bauteilen.

Ein weiterer Gegenstand der vorliegenden Erfindung ist ein Hybridbauteil enthaltend einen beschichteten Metallkörper, wobei die Beschichtung eine Polyamid-Formmasse aufweist.

Ein weiterer Gegenstand der Erfindung ist Verwendung der Hybridbauteile zur Übertragung von elektrischem Strom, bevorzugt in Hoch- und Niedervoltanlagen, mehr bevorzugt in Hochvoltanlagen.

Die erfindungsgemäßen Polyamid-Formmassen, die Hybridbauteile enthaltend die erfindungsgemäßen Formmassen, sowie die erfindungsgemäßen Verwendungen werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahmen von einzelnen Werten (Bereichen) oder Verbindungen erhalten werden können. Werden im Rahmen der vorliegenden Beschreibung Dokumente zitiert, so soll deren Inhalt vollständig zum Offenbarungsgehalt der vorliegenden Erfindung gehören. Werden nachfolgend %-Angaben gemacht, so handelt es sich, wenn nicht anders angegeben, um Angaben in Gewichts-%. Bei Zusammensetzungen beziehen sich die %-Angaben, wenn nicht anders angegeben auf die Gesamtzusammensetzung. Werden nachfolgend Mittelwerte angegeben, so handelt es sich, wenn nicht anders angegeben, um Massenmittel (Gewichtsmittel). Werden nachfolgend Messwerte angegeben, so wurden diese Messwerte, wenn nicht anders angegeben, bei einem Druck von 101325 Pa und einer Temperatur von 25 °C ermittelt.

Im Schutzumfang liegen im kommerziellen Handeln übliche Konfektionierungen und Abpackungen der erfindungsgemäßen Produkte sowohl als solche, als auch in eventuellen Zerkleinerungsformen soweit diese nicht in den Ansprüchen definiert sind.

Die gegebenenfalls verschiedenen Einheiten der Polyamide sind statistisch verteilt. Statistische Verteilungen sind blockweise aufgebaut mit einer beliebigen Anzahl an Blöcken und einer beliebigen Sequenz oder sie unterliegen einer randomisierten Verteilung, sie können auch alternierend aufgebaut sein oder auch über die Polymerkette einen Gradienten bilden, insbesondere können sie auch alle Mischformen bilden, bei denen gegebenenfalls Gruppen unterschiedlicher Verteilungen aufeinander folgen können. Spezielle Ausführungen können dazu führen, dass die statistischen Verteilungen durch die Ausführung Beschränkungen erfahren. Für alle Bereiche, die nicht von der Beschränkung betroffen sind, ändert sich die statistische Verteilung nicht.

Ein Vorteil der erfindungsgemäßen Polyamid-Formmassen ist, dass sie sehr gut brandgeschützt sind, sie weisen eine Brandklassifizierung nach UL94 von V-0 auf.

Ein weiterer Vorteil der erfindungsgemäßen Polyamid-Formmassen ist, dass sie eine hohe Bruchdehnung aufweisen.

Ein weiterer Vorteil der erfindungsgemäßen Polyamid-Formmassen ist, dass nach Lagerung bei hoher Temperatur über einen längeren Zeitraum nur eine sehr geringe Migration von niedermolekularen Bestandteilen an die Oberfläche (Ausblühung, Massenverlust) stattfindet.

Ein weiterer Vorteil der erfindungsgemäßen Polyamid-Formmassen ist, dass kein Verlust des Flammschutzes durch einen Masseverlust durch Migration auftritt.

Ein weiterer Vorteil ist die besonders gute Haftung der erfindungsgemäßen Polyamid-Formmassen an metallischen Oberflächen.

### Polyamidmatrix (A)

Bevorzugt weisen die Polyamide der Polyamidmatrix (A) im statistischen Mittel über das Polymer 8 bis 16 Kohlenstoffatome, mehr bevorzugt 9 bis 14, besonders bevorzugt 10 bis 12 Kohlenstoffatome pro Amideinheit auf. Mehr bevorzugt weisen die Polyamide der Polyamidmatrix (A) in allen Monomereinheiten mindestens 8 Kohlenstoffatome pro Amideinheit auf.

Die Polyamide können Homopolymere, Co-Polymere oder Blends unterschiedlicher Polyamide sein. Die Unterschiede der Polyamide können z.B. aufgrund unterschiedlicher verwendeter Monomere in der Polymerisation, unterschiedlicher Molmassenverteilung (welche sich z.B. in unterschiedlichen Viskositäten ausdrücken kann) oder unterschiedlichen Endgruppen ausdrücken.

Bevorzugt sind die Polyamide ausgewählt aus PA 8, PA 9, PA 10, PA 11, PA 12, PA 6.10, PA 6.12, PA 6.14, PA 8.10, PA 9.10, PA 9.12, PA 10.10, PA 10.12, PA 12.12, PA 6.16, PA 10.16; mehr bevorzugt, PA 6.12, PA 10.10, PA 10.12, PA 11 und PA 12; besonders bevorzugt PA 11 und PA12.

Bevorzugt enthält die Polyamid-Formmasse neben den Polyamiden der Polyamidmatrix (A) kein weiteres Polyamid.

### Flammschutzmittelzusammensetzung (B)

Bevorzugt enthält die Flammschutzmittelzusammensetzung der erfindungsgemäßen Polyamid-Formmasse
15 bis 55 Gew.-%, bevorzugt 25 bis 50 Gew.-%, mehr bevorzugt 30 bis 45 Gew.-% Melamincyanurat (B4);
10 bis 30 Gew.-%, bevorzugt 15 bis 25 Gew.-%, mehr bevorzugt 17 bis 23 Gew.-% Carbo-Polyalkohol (B3);
5 bis 30 Gew.-%, bevorzugt 7 bis 25 Gew.-%, mehr bevorzugt 13 bis 23 Gew.-% Arylphosphonat (B2);
5 bis 30 Gew.-%, bevorzugt 7 bis 25 Gew.-%, mehr bevorzugt 13 bis 23 Gew.-% metallfreies Arylphosphat (B1);
0 bis 15 Gew.-%, bevorzugt 3 bis 12 Gew.-%, mehr bevorzugt 5 bis 10 Gew.-% eines nicht phosphorhaltigen Flammschutzmittels (B5);
wobei die Summe von (B1), (B2), (B3), (B4) und (B5) 100 Gewichtsprozent der Komponente (B) ergibt.

Bevorzugt beträgt in der Flammschutzmittelzusammensetzung der erfindungsgemäßen Polyamid-Formmasse das Masseverhältnis von (B1) zu (B2) gleich 0,25 bis 4, bevorzugt 0,33 bis 3, mehr bevorzugt 0,5 bis 2, insbesondere bevorzugt 0,75 bis 1,5.

Die **nicht phosphorhaltigen Flammschutzmittel** (B5) unterscheiden sich von den Flammschutzmitteln nach B3 und B4. Bevorzugt sind Harnstoff und Harnstoffderivate, Magnesiumhydroxide, Aluminiumhydroxide, Aluminiumsulfat, Borax, Borsäure und Salze der Borsäure (z.B. Zinkborat), Ammoniumsulfat, Kalziumhydroxide. Es können auch halogenhaltige Flammschutzmittel zugesetzt werden.

Bevorzugt enthalten die nicht phosporhaltigen Flammschutzmittel (B5) keine halogenhaltigen Substanzen.

Unter **Melanmincyanurat** (B4) werden auch Melaminkondensationsprodukte, Melem, Melam, Melon verstanden, bevorzugt jedoch ausschließlich Melamincyanurat (CA-RN 37640-57-6) selbst. Das Melamincyanurat wird pulverförmig eingesetzt. Bevorzugt weist es eine Korngröße D50, gemessen durch Laserbeugung mit einem Laser-Granulometer gemäß BS ISO 13320-1, Ausgabe 2000-03-15, von 0,5 bis 100 µm auf, mehr bevorzugt von 0,6 bis 50 µm, besonders bevorzugt von 0,7 bis 25 µm, ganz besonders bevorzugt von 0,8 bis 5 µm und insbesondere bevorzugt von 0,9 bis 4 µm. Die Messung wird vorzugsweise mit einem Cilas Laser Granulometer Typ 715/920 durchgeführt.

Bevorzugt sind kleine Partikelgrößen, da sie den Formteilen eine glattere Oberfläche verleihen.

Der **Carbo-Polyalkohol** (B3) ist bevorzugt ein Kohlenwasserstoff, welcher mit mindestens 3, bevorzugt mindestens 4, mehr bevorzugt mindestens 5, weiter mehr bevorzugt mindestens 6 Hydroxygruppen substituiert ist und gegebenenfalls Ethergruppen enthält, bevorzugt mindestens eine Ethergruppe aufweist.

Der Carbo-Polyalkohol ist mehr bevorzugt ausgewählt aus einem Triol wie Trimethylolpropan oder Glycerol oder ein Derivat hiervon wie Di-trimethylolpropan oder Di-Glycerol (entstanden durch Mono-Veretherung zweier Moleküle der genannten Verbindungen) oder einem Tetrol wie Erythrit, Pentaerythrit oder einem Ethergruppen enthaltenden Derivat hiervon wie Di- oder Tripentaerythrit, einem Pentol wie Xylit oder Arabit, einem Hexol wie Mannit, Sorbit oder dergleichen; daneben sind auch höhere Addukte der genannten Moleküle verwendbar, beispielsweise ein verzweigtes bzw. hyperverzweigtes Polyglycerol; es können selbstverständlich auch Mischungen von Polyolen eingesetzt werden. Mehr bevorzugt sind Erythrit, Pentaerythrit oder Di- oder Tripentaerythrit, insbesondere Di-Pentaerythrit;.

**Arylphosphonate** (B2) im Sinne der Erfindung sind polymer oder oligomer mit mindestens 3 Wiederholungseinheiten, bevorzugt 3 gleichen Wiederholungseinheiten, und enthalten aromatische Reste im Backbone der Moleküle.

Das Arylphosphonat weist bevorzugt die Wiederholungseinheit nach Formel (III) auf 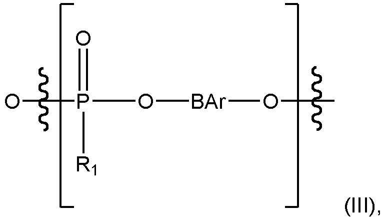
wobei R1 jeweils unabhängig voneinander für einen Alkylrest mit 1 bis 4 Kohlenstoffatomen, bevorzugt Methyl steht, und
wobei BAr jeweils unabhängig voneinander für einen aromatischen Rest steht, bevorzugt für einen mindestens zweikernigen aromatischen Rest, mehr bevorzugt Biphenylen oder 4,4'-(Propan-2,2-diyl)diphenylen.

Bevorzugt weist das Arylphosphonat die Gruppe -BAr-OH als Endgruppen auf.

Insbesondere bevorzugt weist das Arylphosphonat die Wiederholungseinheit nach Formel (IV) auf 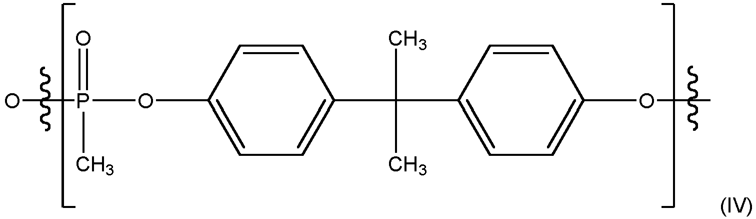 damit weist das Arylphosphonat bevorzugt Bisphenol A Endgruppen auf

Das Arylphosphonat weist bevorzugt eine MVR (melt volume rate) von weniger als 100 ml/10 min auf und mehr bevorzugt eine MVR von mindestens 10 ml/10 min, weiter mehr bevorzugt von mindestens 25 ml/10 min, besonders bevorzugt von mindestens 50 ml/10min und insbesondere bevorzugt von 65 bis 90 ml/10 min (gemessen bei 240°C und einer Auflagemasse von 1,2 kg, gemäß ISO 1133).

Das metallfreie **Arylphosphat** (B1) weist bevorzugt mindestens 2 Phosphatgruppen auf. Mehr bevorzugt weist das metallfreie Arylphosphat mindestens eine Einheit der Formel (I), bevorzugt 1 bis 2 dieser Einheiten 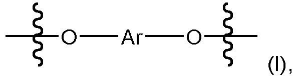 und mindestens zwei Einheiten, bevorzugt zwei bis drei Einheiten, der Formel (II), 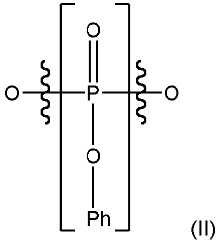 auf,
wobei die Einheiten der Formeln (I) und (II) alternierend vorliegen,
wobei die Anzahl der Einheiten nach Formel (II) immer um 1 größer ist als die der Formel (I),
wobei Ar für ortho-, meta-, para- Phenylen, Naphtylen, Biphenylen steht,
wobei Ph für einen Phenylrest, optional beliebig mit C1 bis C4 Alkyl-Resten substituiert, steht.

Bevorzugt weist das metallfreie Arylphosphat als Endgruppen Phenylreste auf, welche beliebig mit C1 bis C4 Alkyl-Resten substituiert sein können.

Mehr bevorzugt weist das metallfreie Arylphosphat Strukturelemente der Formel (V) 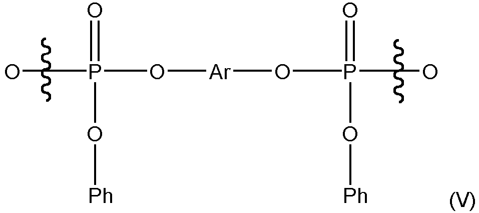 auf.

Besonders bevorzugt weist das metallfreie Arylphosphat die Struktur der Formel (VI) 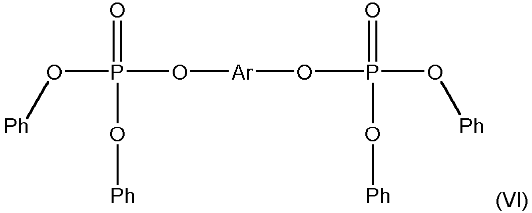 auf,
wobei Ar für meta- oder para- Phenylen steht und Ph für Phenyl steht.

Bevorzugt steht Ar nicht für einen 4,4'-(Propan-2,2-diyl)diphenylen-Rest.

Bevorzugt enthält die Flammschutzmittelzusammensetzung keine Polyphosphate, keine Umsetzungsprodukte des Melamins mit Polyphosphorsäure, keine Derivate der Phosphor(III)- und/oder Phosphor(I)-Säure

Bevorzugt weist die Flammschutzmittelzusammensetzung außer den Komponenten (B1) und (B2) keine weiteren phosphorhaltigen Komponenten auf.

Eine bevorzugte Kombination der Flammschutzmittelzusammensetzung (B) ist:
- wenigstens ein metallfreies Arylphosphat (B1), welche mindestens eine Einheit der Formel (I), bevorzugt 1 bis 2 dieser Einheiten 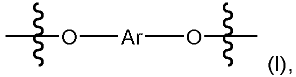 und mindestens zwei Einheiten, bevorzugt zwei bis drei Einheiten, der Formel (II), 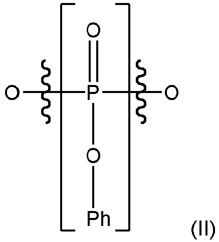
   aufweisen, wobei die Einheiten der Formeln (I) und (II) alternierend vorliegen,
   wobei die Anzahl der Einheiten nach Formel (II) immer um 1 größer ist als die der Formel (I),
   wobei Ar für ortho-, meta-, para- Phenylen, Naphtylen, Biphenylen steht, jedoch nicht für einen 4,4'-(Propan-2,2-diyl)diphenylen-Rest,
   wobei Ph für einen Phenylrest, optional beliebig mit C1 bis C4 Alkyl-Resten substituiert, steht;
- wenigstens ein Arylphosphonat (B2), welche die Wiederholungseinheit nach Formel (IV) aufweisen 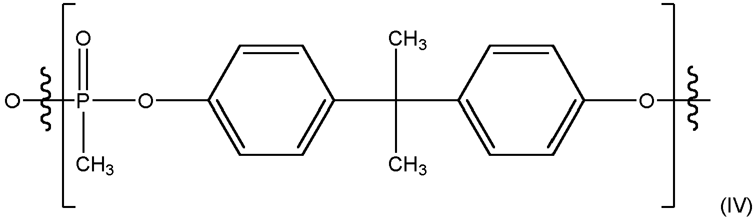 **und** als Endgruppe Bisphenol A;
- Carbo-Polyalkohol (B3), welcher mit mindestens 3, bevorzugt mindestens **4,** mehr bevorzugt mindestens 5, weiter mehr bevorzugt mindestens 6 Hydroxygruppen substituiert ist und gegebenenfalls Ethergruppen enthält, bevorzugt mindestens eine Ethergruppe aufweist;
- Melanmincyanurat (B4)
- und optional, nicht phosphorhaltige Flammschutzmittel (B5) ausgewählt aus Harnstoff und Harnstoffderivate, Magnesiumhydroxide, Aluminiumhydroxide, Aluminiumsulfat, Borax, Borsäure und Salze der Borsäure (z.B. Zinkborat), Ammoniumsulfat, Kalziumhydroxide, ggf. auch halogenhaltige Flammschutzmitteln.

Eine mehr bevorzugte Kombination der Flammschutzmittelzusammensetzung (B) ist:
- wenigstens ein metallfreies Arylphosphat (B1), welche Strukturelemente der Formel (V) 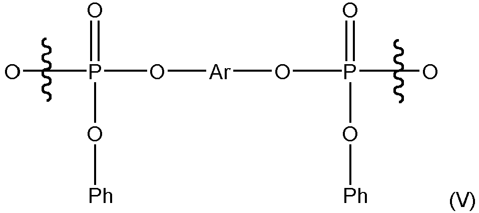 aufweisen,
   wobei Ar für ortho-, meta-, para- Phenylen, Naphtylen, Biphenylen steht, jedoch nicht für einen 4,4'-(Propan-2,2-diyl)diphenylen-Rest,
   wobei Ph für einen Phenylrest, optional beliebig mit C1 bis C4 Alkyl-Resten substituiert, steht;
- wenigstens ein Arylphosphonat (B2), welche die Wiederholungseinheit nach Formel (IV) aufweisen 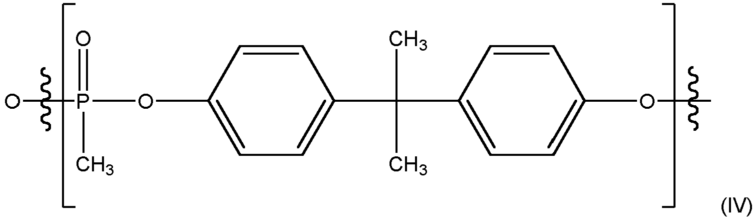 und als Endgruppe Bisphenol A;
- Carbo-Polyalkohol (B3), welcher mit mindestens 3, bevorzugt mindestens **4,** mehr bevorzugt mindestens 5, weiter mehr bevorzugt mindestens 6 Hydroxygruppen substituiert ist und gegebenenfalls Ethergruppen enthält, bevorzugt mindestens eine Ethergruppe aufweist;
- Melanmincyanurat (B4) mit einer Korngröße D50, gemessen durch Laserbeugung mit einem Laser-Granulometer gemäß BS ISO 13320-1, Ausgabe 2000-03-15, von 0,5 bis 100 µm auf, mehr bevorzugt von 0,6 bis 50 µm, besonders bevorzugt von 0,7 bis 25 µm, ganz besonders bevorzugt von 0,8 bis 5 µm und insbesondere bevorzugt von 0,9 bis 4 µm;
- und optional, nicht phosphorhaltige Flammschutzmittel (B5) ausgewählt aus Harnstoff und Harnstoffderivate, Magnesiumhydroxide, Aluminiumhydroxide, Aluminiumsulfat, Borax, Borsäure und Salze der Borsäure (z.B. Zinkborat), Ammoniumsulfat, Kalziumhydroxide, ggf. auch halogenhaltige Flammschutzmitteln;
- mit einem Masseverhältnis von (B1) zu (B2) gleich 0,25 bis **4,** bevorzugt 0,33 bis 3, mehr bevorzugt 0,5 bis 2, insbesondere bevorzugt 0,75 bis 1,5.

Eine besonders bevorzugte Kombination der Flammschutzmittelzusammensetzung (B) ist:
- 5 bis 30 Gew.-% wenigstens eines metallfreien Arylphosphats (B1), welche die Struktur der Formel (VI) 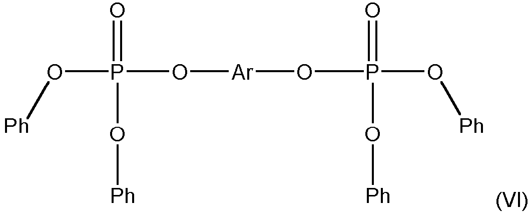 aufweisen,
   wobei Ar für meta- oder para- Phenylen steht,
   wobei Ph für einen Phenylrest, optional beliebig mit C1 bis C4 Alkyl-Resten substituiert, steht;
- 5 bis 30 Gew.-% wenigstens eines Arylphosphonats (B2), welche die Wiederholungseinheit nach Formel (IV) aufweisen 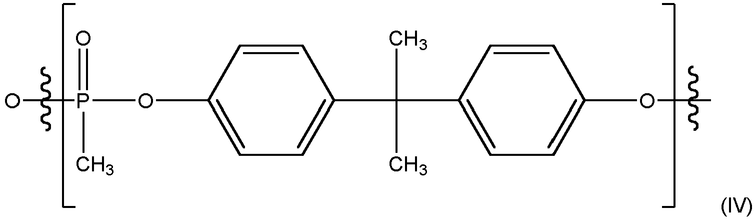 und als Endgruppe Bisphenol A;
- 10 bis 30 Gew.-% Carbo-Polyalkohol (B3), welcher mit mindestens 3, bevorzugt mindestens 4, mehr bevorzugt mindestens 5, weiter mehr bevorzugt mindestens 6 Hydroxygruppen substituiert ist und bevorzugt mindestens eine Ethergruppe aufweist;
- 15 bis 55 Gew.-% Melanmincyanurat (B4) mit einer Korngröße D50, gemessen durch Laserbeugung mit einem Laser-Granulometer gemäß BS ISO 13320-1, Ausgabe 2000-03-15, von 0,5 bis 100 µm auf, mehr bevorzugt von 0,6 bis 50 µm, besonders bevorzugt von 0,7 bis 25 µm, ganz besonders bevorzugt von 0,8 bis 5 µm und insbesondere bevorzugt von 0,9 bis 4 µm;
- und 0 bis 15 Gew.-% nicht phosphorhaltige Flammschutzmittel (B5) ausgewählt aus Harnstoff und Harnstoffderivate, Magnesiumhydroxide, Aluminiumhydroxide, Aluminiumsulfat, Borax, Borsäure und Salze der Borsäure (z.B. Zinkborat), Ammoniumsulfat, Kalziumhydroxide;
- wobei die Summe von (B1), (B2), (B3), (B4) und (B5) 100 Gewichtsprozent der Komponente (B) ergibt;
- mit einem Masseverhältnis von (B1) zu (B2) gleich 0,25 bis 4, bevorzugt 0,33 bis 3, mehr bevorzugt 0,5 bis 2, insbesondere bevorzugt 0,75 bis 1,5.

Bevorzugt enthält die erfindungsgemäße Polyamid-Formmasse neben den phosphorhaltigen Flammschutzmitteln nicht mehr als 5000 ppm, bevorzugt nicht mehr als 1000 ppm, mehr bevorzugt nicht mehr als 500 ppm, besonders bevorzug nicht mehr als 250 ppm Phosphor aus anderen Quellen, wie z.B. aus Stabilisatoren, Prozesshilfsmittel oder Katalysatoren.

Optional enthalten die erfindungsgemäßen Polyamid-Formmassen übliche Verarbeitungshilfsmittel wie Stabilisatoren, Oxidationsverzögerer, weitere Mittel gegen Wärmezersetzung und Zersetzung durch ultraviolettes Licht, gleit- und Entformungsmittel, Färbemittel wie Farbstoffe und Pigmente, Keimbildungsmittel, Weichmacher usw. enthalten.

Optional enthalten die erfindungsgemäßen Polyamid-Formmassen neben den beschriebenen Komponenten weitere Zusätze ausgewählt aus einem oder mehreren Vertretern, optional auch mehreren der gleichen Art wie Stabilisatoren, andere Polymere, Schlagzähmodifier, Weichmacher, Färbemittel wie Pigmente und Farbstoffe, Verarbeitungshilfsmittel.

Geeignete **Oxidationsstabilisatoren** sind aromatische Amine, sterisch gehinderte Phenole, Hydrochinone, Phosphite, Phosphonite, Thiosynergisten, Hydroxylamine, Benzofuranonderivate, acryloylmodifizierte Phenole etc. Derartige Oxidationsstabilisatoren sind in einer Vielzahl von Typen kommerziell erhältlich, beispielsweise unter den Handelsnamen Naugard 445, Irganox 1010, Irganox 1098, Irgafos 168, P-EPQ oder Lowinox DSTDP. Im Allgemeinen enthalten die Formmassen etwa 0,01 bis etwa 2 Gew.-% und bevorzugt etwa 0,1 bis etwa 1,5 Gew.-% Oxidationsstabilisatoren.

Darüber hinaus können die Formmassen auch UV-Stabilisatoren bzw. Lichtstabilisatoren enthalten. Geeignete **UV-Stabilisatoren** sind organische UV-Absorber, beispielsweise Benzophenonderivate, Benzotriazolderivate, Resorcine, Salicylate, Oxalanilide und Phenyltriazine. Lichtstabilisatoren vom HALS-Typ sind Tetramethylpiperidinderivate. UV-Stabilisatoren und Lichtstabilisatoren können vorteilhaft in Kombination eingesetzt werden. Beide sind in einer Vielzahl von Typen kommerziell erhältlich; hinsichtlich der Dosierung kann den Herstellerangaben gefolgt werden.

Weiterhin können die Formmassen Hydrolysestabilisatoren enthalten wie etwa monomere, oligomere oder polymere Carbodiimide oder Bisoxazolin.

Andere Polymere, die als Zusatz in den Formmassen enthalten sein können, sind beispielsweise Polyetheramide oder Polytetrafluorethylen (PTFE).

**Schlagzähmodifier** sind dem Fachmann bekannt. Sie enthalten funktionelle Gruppen, die von ungesättigten funktionellen Verbindungen herrühren, die entweder in die Hauptkette einpolymerisiert oder auf die Hauptkette aufgepfropft wurden. Am gebräuchlichsten sind EPM- oder EPDM-Kautschuk, der mit Maleinsäureanhydrid radikalisch gepfropft wurde. Derartige Kautschuke können auch zusammen mit einem unfunktionalisierten Polyolefin wie z. B. isotaktischem Polypropylen eingesetzt werden, wie in der EP-A-0 683 210 beschrieben.

Weichmacher sind dem Fachmann aus Gächter/Müller, Kunststoffadditive, C. Hanser Verlag, 2. Ausgabe, S. 296 bekannt. Als Weichmacher geeignete, übliche Verbindungen sind z. B. Ester der p-Hydroxybenzoesäure mit 2 bis 20 C-Atomen in der Alkoholkomponente oder Amide von Arylsulfonsäuren mit 2 bis 12 C-Atomen in der Aminkomponente, bevorzugt Amide der Benzolsulfonsäure. Als Weichmacher kommen unter anderem p-Hydroxybenzoesäureethylester, p-Hydroxybenzoesäureoctylester, p-Hydroxybenzoesäure-i-hexadecylester, Toluolsulfonsäure-n-octylamid, Benzolsulfonsäure-n-butylamid oder Benzolsulfonsäure-2-ethylhexylamid in Frage.

Geeignete **Pigmente** und/oder **Farbstoffe** sind beispielsweise Mischoxide, Titandioxid, Eisenoxid, Zinksulfid, Ultramarin, Nigrosin, organische Pigmente, wie Phthalocyanine, Chinacridone, Perylene, Nigrosin, Anthrachinone, Perlglanzpigmente.

Geeignete **Verarbeitungshilfsmittel** sind beispielsweise Paraffine, Fettalkohole, Fettsäureamide, Stearate wie Calciumstearat, Paraffinwachse, Montanate oder Polysiloxane.

Bevorzugt enthalten die erfindungsgemäßen Polyamid-Formmassen keine halogenhaltigen Substanzen.

Die erfindungsgemäßen Formmassen weisen eine Brandklassifizierung nach UL94 von V0 auf. Diese Klassifizierung findet nach den Richtlinien der UL statt, bevorzugt jedoch nach der DIN EN 60695-11-10:2014 an Prüflingen der Abmessungen 125 mm * 13 mm * 0,8 mm unter Berücksichtigung der Berichtigung 1 (Okt. 2015) der genannten Norm.

Die erfindungsgemäßen Formmassen weisen bevorzugt eine Bruchdehnung von mindestens 50%, bevorzugt mindestens 100%, mehr bevorzugt mindestens 150% und insbesondere bevorzugt von mindestens 200% auf. Die Bruchdehnung wird an Zugstäben des Typs 1A (DIN EN ISO 527-2) gemäß der DIN EN ISO 527-1 gemessen.

Die erfindungsgemäßen Formmassen weisen bevorzugt nur eine sehr geringe Migration niedermolekularer Bestandteile nach Lagerung bei hoher Temperatur über einen längeren Zeitraum auf. Dazu werden Prüflinge der Abmessungen 125 mm * 13 mm * 0,8 mm bei 150°C für 24h gelagert und die Menge des migrierten Materials bestimmt. Das Bestimmungsverfahren ist in den Beispielen näher erläutert. Bevorzugt beträgt der Masseverlust durch Migration weniger als 1,1 Gew.-%, mehr bevorzugt weniger als 1,0 Gew% und besonders bevorzugt weniger als 0,9 Gew.-% bezogen auf die gesamte Formmasse.

Bevorzugt weisen die erfindungsgemäßen Formmassen eine Klassifizierung von UL94 V-0, einen Masseverlust durch Migration von kleiner 1,1 Gew.-% und eine Bruchdehnung von mindestens 50% auf.

Bevorzugt weisen die erfindungsgemäßen Polyamid-Formmassen keine Zusätze auf, die die elektrische Leitfähigkeit erhöhen, insbesondere keine Leitfähigkeitsruße oder Carbon Nanotubes.

Eine bevorzugte Polyamid-Formmasse enthält:
(A) eine Polyamidmatrix enthaltend ein oder mehrere Polyamide mit im statistischen Mittel über das Polymer 8 bis 16 Kohlenstoffatome, mehr bevorzugt 9 bis 14, besonders bevorzugt 10 bis 12 Kohlenstoffatome pro Amideinheit;
(B) eine Flammschutzmittelzusammensetzung, enthaltend:
   (B1) wenigstens ein metallfreies Arylphosphat mit Strukturelementen der Formel (V); 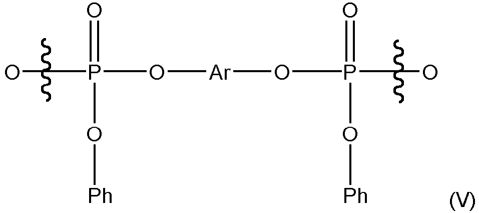
      wobei Ar für ortho-, meta-, para- Phenylen, Naphtylen, Biphenylen steht, jedoch nicht für einen 4,4'-(Propan-2,2-diyl)diphenylen-Rest,
      wobei Ph für einen Phenylrest, optional beliebig mit C1 bis C4 Alkyl-Resten substituiert, steht;
   (B2) wenigstens ein Arylphosphonat mit Wiederholungseinheiten nach Formel (IV); 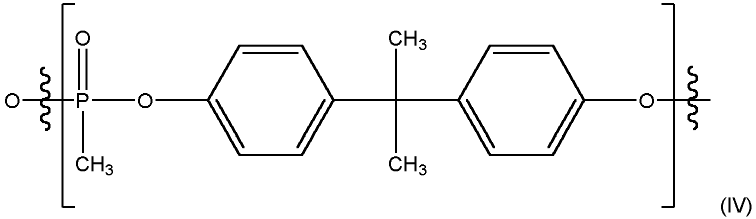 und als Endgruppe Bisphenol A;
   (B3) einem Carbo-Polyalkohol, welcher mit mindestens 3, bevorzugt mindestens 4, mehr bevorzugt mindestens 5, weiter mehr bevorzugt mindestens 6 Hydroxygruppen substituiert ist und gegebenenfalls Ethergruppen enthält, bevorzugt mindestens eine Ethergruppe aufweist;
   (B4) Melamincyanurat mit einer Korngröße D50, gemessen durch Laserbeugung mit einem Laser-Granulometer gemäß BS ISO 13320-1, Ausgabe 2000-03-15, von 0,5 bis 100 µm auf, mehr bevorzugt von 0,6 bis 50 µm, besonders bevorzugt von 0,7 bis 25 µm, ganz besonders bevorzugt von 0,8 bis 5 µm und insbesondere bevorzugt von 0,9 bis 4 µm;
   (B5) optional, nicht phosphorhaltige Flammschutzmittel ausgewählt aus Harnstoff und Harnstoffderivate, Magnesiumhydroxide, Aluminiumhydroxide, Aluminiumsulfat, Borax, Borsäure und Salze der Borsäure (z.B. Zinkborat), Ammoniumsulfat, Kalziumhydroxide, ggf. auch halogenhaltige Flammschutzmitteln;
      mit einem Masseverhältnis von (B1) zu (B2) gleich 0,25 bis 4, bevorzugt 0,33 bis 3, mehr bevorzugt 0,5 bis 2, insbesondere bevorzugt 0,75 bis 1,5;
wobei der Gehalt an Phosphor aus der gesamten Flammschutzmittelzusammensetzung 0,5 bis 1,5 Gew.-% bezogen auf die Polyamid-Formmasse beträgt.

Eine ebenfalls bevorzugte Polyamid-Formmasse enthält:
(A) eine Polyamidmatrix enthaltend ein oder mehrere Polyamide ausgewählt aus PA 8, PA 9, PA 10, PA 11, PA 12, PA 6.10, PA 6.12, PA 6.14, PA 8.10, PA 9.10, PA 9.12, PA 10.10, PA 10.12, PA 12.12, PA 6.16, PA 10.16; mehr bevorzugt, PA 6.12, PA 10.10, PA 10.12, PA 11 und PA 12; besonders bevorzugt PA 11 und PA12;
(B) eine Flammschutzmittelzusammensetzung, enthaltend:
   (B1) wenigstens ein metallfreies Arylphosphat mit mindestens einer Einheit der Formel (I), bevorzugt 1 bis 2 dieser Einheiten 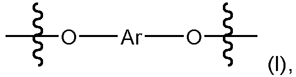 und mindestens zwei Einheiten, bevorzugt zwei bis drei Einheiten, der Formel (II), 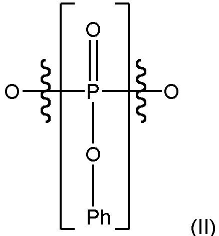
      auf, wobei die Einheiten der Formeln (I) und (II) alternierend vorliegen,
      wobei die Anzahl der Einheiten nach Formel (II) immer um 1 größer ist als die der Formel (I),
      wobei Ar für ortho-, meta-, para- Phenylen, Naphtylen, Biphenylen steht, jedoch nicht für einen 4,4'-(Propan-2,2-diyl)diphenylen-Rest,
      wobei Ph für einen Phenylrest, optional beliebig mit C1 bis C4 Alkyl-Resten substituiert, steht;
   (B2) wenigstens ein Arylphosphonat mit Wiederholungseinheiten nach Formel (IV); 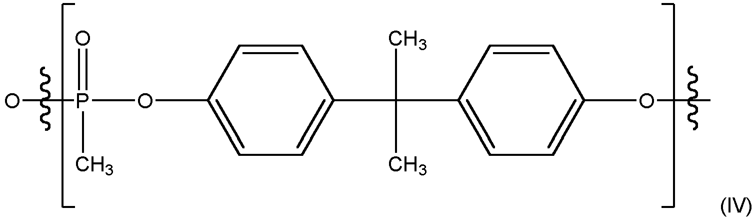 und als Endgruppe Bisphenol A;
   (B3) einem Carbo-Polyalkohol, welcher mit mindestens 3, bevorzugt mindestens 4, mehr bevorzugt mindestens 5, weiter mehr bevorzugt mindestens 6 Hydroxygruppen substituiert ist und gegebenenfalls Ethergruppen enthält, bevorzugt mindestens eine Ethergruppe aufweist;
   (B4) Melamincyanurat;
   (B5) optional, nicht phosphorhaltige Flammschutzmittel ausgewählt aus Harnstoff und Harnstoffderivate, Magnesiumhydroxide, Aluminiumhydroxide, Aluminiumsulfat, Borax, Borsäure und Salze der Borsäure (z.B. Zinkborat), Ammoniumsulfat, Kalziumhydroxide, ggf. auch halogenhaltige Flammschutzmitteln;
      mit einem Masseverhältnis von (B1) zu (B2) gleich 0,25 bis 4, bevorzugt 0,33 bis 3, mehr bevorzugt 0,5 bis 2, insbesondere bevorzugt 0,75 bis 1,5;
wobei der Gehalt an Phosphor aus der gesamten Flammschutzmittelzusammensetzung 0,5 bis 1,5 Gew.-% bezogen auf die Polyamid-Formmasse beträgt.

Eine weiterhin bevorzugte Polyamid-Formmasse enthält:
(A) eine Polyamidmatrix enthaltend ein oder mehrere Polyamide mit im statistischen Mittel über das Polymer 8 bis 16 Kohlenstoffatome, mehr bevorzugt 9 bis 14, besonders bevorzugt 10 bis 12 Kohlenstoffatome pro Amideinheit;
(B) eine Flammschutzmittelzusammensetzung, enthaltend:
   (B1) wenigstens ein metallfreies Arylphosphat mit mindestens einer Einheit der Formel (I), bevorzugt 1 bis 2 dieser Einheiten 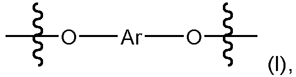 und mindestens zwei Einheiten, bevorzugt zwei bis drei Einheiten, der Formel (II), 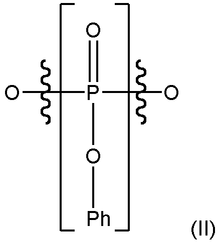
      auf, wobei die Einheiten der Formeln (I) und (II) alternierend vorliegen,
      wobei die Anzahl der Einheiten nach Formel (II) immer um 1 größer ist als die der Formel (I),
      wobei Ar für ortho-, meta-, para- Phenylen, Naphtylen, Biphenylen steht, jedoch nicht für einen 4,4'-(Propan-2,2-diyl)diphenylen-Rest,
      wobei Ph für einen Phenylrest, optional beliebig mit C1 bis C4 Alkyl-Resten substituiert, steht;
   (B2) wenigstens ein Arylphosphonat mit Wiederholungseinheiten nach Formel (IV); 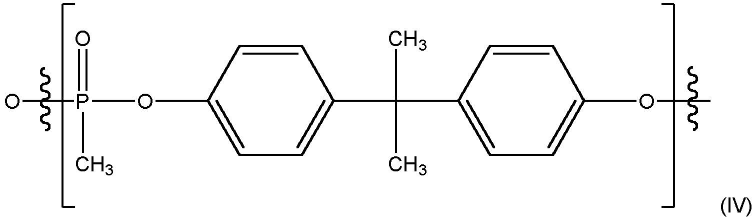 und als Endgruppe Bisphenol A;
   (B3) einem Carbo-Polyalkohol, welcher mit mindestens 3, bevorzugt mindestens 4, mehr bevorzugt mindestens 5, weiter mehr bevorzugt mindestens 6 Hydroxygruppen substituiert ist und gegebenenfalls Ethergruppen enthält, bevorzugt mindestens eine Ethergruppe aufweist;
   (B4) Melamincyanurat;
   (B5) optional, nicht phosphorhaltige Flammschutzmittel ausgewählt aus Harnstoff und Harnstoffderivate, Magnesiumhydroxide, Aluminiumhydroxide, Aluminiumsulfat, Borax, Borsäure und Salze der Borsäure (z.B. Zinkborat), Ammoniumsulfat, Kalziumhydroxide, ggf. auch halogenhaltige Flammschutzmitteln;
      mit einem Masseverhältnis von (B1) zu (B2) gleich 0,25 bis 4, bevorzugt 0,33 bis 3, mehr bevorzugt 0,5 bis 2, insbesondere bevorzugt 0,75 bis 1,5;

   wobei der Gehalt an Phosphor aus der gesamten Flammschutzmittelzusammensetzung 0,5 bis 1,5 Gew.-% bezogen auf die Polyamid-Formmasse beträgt;
   wobei die Formmasse eine Klassifizierung von UL94 V-0, einen Masseverlust durch Migration von kleiner 1,1 Gew.-% und eine Bruchdehnung von mindestens 50% aufweist.

Die vorliegende Erfindung betrifft die Verwendung der erfindungsgemäßen Polyamid-Formmassen zur Herstellung von Bauteilen, sowie die Bauteile selbst, besonders für brandgeschützte Anwendungen im Fahrzeugbereich, vorzugsweise als Beschichtung, Abdeckung, Folie, Profil, Rohr, Wellrohr, Hohlkörper, Dichtung, Verkleidung, Halterung, Gehäuse, Ummantelung, Elektro- und Elektronikbauteile wie vorzugsweise stromführende Metallteile.

Im erfindungsgemäßen Verfahren zur Isolierung von stromführenden Bauteilen werden vorzugsweise die Bauteile durch Pressen, Schäumen, Extrusion, Coextrusion, Blasformen, 3D-Blasformen, Coextrusionsblasformen, Coextrusions-3D-Blasformen, Coextrusions-Saugblasformen, Extrusionsbeschichtung, Pulverbeschichtung oder Spritzgießen hergestellt. Dem Fachmann sind derartige Verfahren bekannt.

Bevorzugt enthalten die erfindungsgemäßen Hybridbauteile einen beschichteten Metallkörper, wobei die Beschichtung eine Polyamid-Formmasse aufweist, enthaltend:
(A) eine Polyamidmatrix enthaltend ein oder mehrere Polyamide mit mindestens 8 Kohlenstoffen pro Amideinheit
(B) eine Flammschutzmittelzusammensetzung, enthaltend:
   (B1) wenigstens einem metallfreien Arylphosphat;
   (B2) wenigstens einem Arylphosphonat;
   (B3) einem Carbo-Polyalkohol;
   (B4) Melamincyanurat;
   (B5) optional nicht phosphorhaltige Flammschutzmittel,
wobei der Gehalt an Phosphor aus der gesamten Flammschutzmittelzusammensetzung 0,5 bis 1,5 Gew.-%, bevorzugt 0,75 bis 1,25 Gew.-% bezogen auf die Polyamid-Formmasse beträgt. Die Bestanteile der Polyamid-Formmasse sind vorstehend beschrieben.

Bevorzugt enthalten die nicht phosporhaltigen Flammschutzmittel (B5) keine halogenhaltigen Flammschutzmittel. Mehr bevorzugt enthält die gesamte Beschichtung keine halogenhaltigen Substanzen. Damit verbunden ist der Vorteil eines besseren Korrosionsschutzes, sowie die bessere Umweltverträglichkeit, auch können selbst bei extremer Erhitzung wie z.B. einem Metallbrand keine halogenhaltigen Substanzen emittiert werden.

Zudem betrifft die vorliegende Erfindung ein Verfahren zur Herstellung eines solchen Bauteils. Es ist dadurch gekennzeichnet, dass die Polyamid-Formmasse in einem Extrusions- oder Extrusionsblasverfahren, einem Spritzgussverfahren oder einem Hinterspritzen zum Bauteil geformt wird.

Insbesondere im Falle der Hybridbauteile, können diese nach der Beschichtung des Metallkörpers umgeformt werden. Es ist auch möglich, dass an den Hybridbauteilen weitere Anbauten angebracht werden, wie z.B. Stecker und Buchsen, Verschraubungen, Verbindungselemente.

Bei der Umformung zeichnen sich die erfindungsgemäßen Polyamid-Formmassen vorteilhaft durch ihre sehr gute Formbarkeit aus, so treten bei der Umformung eines Hybridbauteiles keine Ablösungen, Risse, Schrumpfwellen und ähnliche Effekte der Beschichtung aus der Polyamid-Formmasse (im Folgenden auch nur als Polyamid-Beschichtung bezeichnet) auf.

Insbesondere durch ihre gute Formbarkeit wird sichergestellt, dass die Polyamid-Beschichtung eine effektive elektrische Isolation darstellt, insbesondere im Hochvoltbereich. Im Hochvoltbereich werden große Ladungsmengen über lange Zeiträume transportiert. Hierbei zeichnet sich die Beschichtung mit den erfindungsgemäßen Formmassen durch eine ausgezeichnete Temperaturstabilität aus. Dies äußert sich in zweifacher Weise. Zum einen treten keine wesentlichen Masseverluste durch Migration auf. Damit bleiben die guten Isolationseigenschaften erhalten, sowohl zwischen der Außenwelt und dem stromführenden Metall als auch an der Oberfläche der Polyamid-Beschichtung (Kriechstromverhinderung). Zum anderen sind die Polyamid-Beschichtungen auch nach langer Zeit und hohen Temperaturen weiterhin mechanisch stabil, z.B. gegen Vibrationen der Fahrzeuge, so treten insbesondere an den oben genannten Umformungen keine Risse auf, die insbesondere die Isolationswirkung herabsetzen.

Die erfindungsgemäßen Hybridbauteile können bevorzugt in Fahrzeugen eingesetzt werden, wobei unter Fahrzeugen alle Transportmittel verstanden werden, also zu Wasser, Land, Luft und Weltraum. Die Hybridbauteile dienen z.B. der Ladungsübertragung in der Stromversorgung, sowohl innerhalb des den Strom generierenden Bauteils als auch der Übertragung zum Rezipienten. Bevorzugte Anwendungen sind die Verwendung in elektrisch betriebenen Fahrzeugen, z.B. die Reihen- oder Parallelschaltung von Stromspeichersystemen oder Stromgeneratoren, die Übertragung der Ladung vom Stromspeicher- oder Generatorsystem zum Antriebsaggregat, die Übertragung von Ladung zu weiteren stromverbrauchenden Systemen, bevorzugt in Hochvoltsystemen.

Die erfindungsgemäßen Hybridbauteile können weiterhin bevorzugt auch in ortsfesten Systemen verwendet werden, wie Kraftwerksanlagen: Windkraftanlagen, Brennstoff- oder Elektrolysezellen, Wasserkraftwerken oder anderen Kraftwerken, oder in Zwischenverarbeitern wie Umspannwerken u.ä., oder in Übertragungseinrichtungen wie Kabel- und Leitungssysteme im Boden, unter Wasser oder in Bauwerken, z.B. Brücken, wobei letztere insbesondere der Witterung und Vibrationen durch Benutzung ausgesetzt sind.

Die Gehaltsangaben des Phosphors in den erfindungsgemäßen Gegenständen beziehen sich auf den Phophorgehalt als Element.

### Methoden

Differential Scanning Calorimetry (DSC):
DSC Messungen wurden gemäß DIN EN ISO 11357-1: 2016 durchgeführt.

Relative Lösungsviskosität (η-rel-Wert):
Die Proben werden bei 30 °C in m-Kresol gelöst (0,005 g/ml) und bei 25,00 °C in einem Viskositäts-Messsystem (LAUDA PVS oder Schott AVS Pro) vermessen.

Die erfindungsgemäßen Formmassen weisen eine Brandklassifizierung nach UL94 von V-0 auf. Die Klassifizierung findet nach den Richtlinien der UL statt, bevorzugt jedoch nach der DIN EN 60695-11-10:2014 an Prüflingen der Abmessungen 125 mm * 13 mm * 0,8 mm unter Berücksichtigung der Berichtigung 1 (Okt. 2015) der genannten Norm.

Zur Bestimmung des Masseverlustes der Migration wird ein Prüfling (125 mm * 13 mm * 0.8 mm) bei 23°C gewogen und anschließend 24h bei 150°C in einem Ofen gemäß IEC 60216-4 thermisch behandelt. Danach wird der Stab 30 min lang bei 23°C abgekühlt und mit einem Feuchttuch mit Aceton mechanisch gereinigt bis kein abwischbarer Belag vorhanden ist (Spiegelprobe). Danach wird der Stab 15 min lang bei 23°C getrocknet und mittels eines Ionisators elektrostatisch entladen. Der Massenverlust wird durch ein erneutes Wiegen als Mittelwert aus drei Proben berechnet. Der negative Wert davon wird als Masseverlust der Migration bezeichnet.

Die Bruchdehnung wird gemäß DIN EN ISO 527-1 durchgeführt. Es wurden Schulterstäbe A1 gemäß Teil 2 der genannten Norm verwendet. Die Messungen wurden bei 23°C mit einer Geschwindigkeit von 50 mm/min vorgenommen.

Der Bruchdehnung kommt im Sinne der vorliegenden Erfindung eine besondere Bedeutung zu, da die Verwendung als elektrischer Isolator zur Ummantelung von Stromleitern insbesondere im Hochvoltbereich besonders hohe Anforderungen erfüllen muss. Diese Leiter werden um bis zu 180° umgeformt, dabei muss sichergestellt sein, dass der Isolator keinerlei Risse aufweist, denn diese würden als Strombrücken fungieren. Es ist unmittelbar verständlich, dass diese Anforderungen z.B. in der Anwendung im KFZ-Bereich mit größter Sicherheit bewältigt werden müssen, um Menschen, die im Motorraum hantieren nicht zu gefährden.

### Materialien:

PA 6.10: mittelviskos
PA 6.12: mittelviskos
PA 10.12: mittelviskos
PA 12: hochviskos
PA 12/6: mittelviskos
Melamincyanurat (MC), Melapur MC 25 (BASF)
Dipentaerythrit, Firma Perstorp
Fyrolflex^{®} Sol-DP und -RDP, Warenzeichen der Firma ICL IP America Inc., USA
ADK STAB FP-600, Produkt der ADEKA, Polymer Additives Europe, Frankreich
Disflamoll^{®} DPK, Warenzeichen der Firma Lanxess, Deutschland
AFLAMMIT^{®} PCO 900, Warenzeichen der Thor Specialities Limited, Vereinigtes Königreich Amgard^{®} CU, Warenzeichen der Firma Lanxess, Deutschland
Nofia^{®} HM7000, Warenzeichen der Firma FRX polymers, inc., USA

Die Stabilisatormischung enthält Schlagzähmodifikator, Stabilisator (Hitze und/oder Oxidation) und Farbstoffe/Pigmente.

### Beispiel 1: Allgemeine Arbeitsvorschrift zur Compoundierung von Polyamid-Formmassen

Die Formmassen wurden auf einem gleichläufigen Doppelschnecken-Extruder hergestellt. Die festen Komponenten wurden über den Haupteinzug und die flüssigen Komponenten wurden downstream in die Schmelze dosiert. Die Gehäusetemperaturen sind in der Tabelle 1 aufgelistet. Die Granulierung erfolgte per Stranggranulierung mit anschließender Trocknung in einem Trockenluftkammertrockner 12 Stunden lang bei 80°C.

### Beispiel 2: Herstellung der Prüfkörper

Die Prüfkörper wurden mittels Spritzgussverfahrens in Anlehnung an DIN EN ISO 294-1 und DIN EN ISO 16396-2 hergestellt. Die Einspritzgeschwindigkeit betrug 200 mm/s, die Massentemperatur betrug in allen Fällen 240°C, die entsprechenden Formtemperaturen sind in der Tabelle 1 angegeben.

Folgende Proben wurden für die Ermittlung der typischen Materialeigenschaften realisiert:
- Vielzweckprobenkörper nach DIN EN ISO 527-2 Typ 1A für mechanische Prüfungen
- UL94-Prüfkörper 172 mm x 12,7 mm x 0,8 mm für UL94V und Masseverlust durch Migration
- Platten für elektrische Messungen 130 mm x 130 mm x 1 mm.

### Beispiel 3: mechanisch und elektrische Prüfungen

Die Bruchdehnung wurde gemäß DIN EN ISO 527-1 bestimmt.

Die elektrische Durchschlagfestigkeit wurde nach DIN EN 60243-1, AC K20/K20 bestimmt.

**Tabelle 1: Fertigungsparameter (Temperaturen in °C) der Beispiele 2**

| | Formmasse | Spritzgussform |
|---|---|---|
| Ex 1, 4 und 5 | 260 | 80 |
| **Ex 2, 3, 7, 14-19** | 250 | 80 |
| Ex 6 | 220 | 80 |
| Ex 8 und 9 | 260 | 60 |
| Ex 10-13 | 240 | 80 |

**Tabelle 2: Ergebnisse der Prüfungen nach Beispiel 3 der Prüfkörper gemäß Beispiel 2**

| | UL 94 | Bruchdehnung [%] | Migration [%] | Durchschlagfestigkeit [MV / m] |
|---|---|---|---|---|
| Ex 1 | V-0 | 5,9 | 2,64 | 30,7 |
| **Ex 2** | V-0 | 51,3 | 0,97 | 28,6 |
| Ex 3 | V-0 | 55,1 | 1,84 | 30,9 |
| Ex 4 | V-0 | 75,7 | 2,21 | 31,5 |
| Ex 5 | V-0 | 251,6 | 1,51 | 29,1 |
| Ex 6 | V-0 | 320,6 | 3,61 | 33,2 |
| **Ex 7** | V-0 | 243,6 | 0,79 | 35,3 |
| Ex 8 | V-0 | 230,3 | 1,35 | 28,6 |
| **Ex 9** | V-0 | 213,5 | 0,89 | 28,5 |
| Ex 10 | V-0 | 198,5 | 2,80 | 31,6 |
| Ex 11 | V-0 | 241,7 | 1,30 | nb* |
| Ex 12 | V-2 | 217,4 | 1,00 | nb* |
| Ex 13 | V-2 | 179,9 | 0,47 | nb* |
| **Ex 14** | V-0 | 250,1 | 1,04 | 32,4 |
| Ex 15 | V-0 | 246,4 | 1,80 | 32,4 |
| Ex 16 | V-0 | 271,7 | 4,44 | 28,5 |
| Ex 17 | V-0 | 280,1 | 1,39 | 28,3 |
| **Ex 18** | V-0 | 220,2 | 0,88 | 34,2 |
| Ex 19 | V-0 | 254,1 | 1,17 | 29,3 |

| | | | | |
|---|---|---|---|---|
| *nb - nicht bestimmt | | | | |

**Tabelle 1: Zusammensetzung (in Gew.-%) der Polyamid-Formmassen gemäß Beispiel 1**

| | | Ex 1 | **Ex 2** | Ex 3 | Ex 4 | Ex 5 | Ex 6 | **Ex 7** | Ex 8 | **Ex 9** | Ex 10 |
|---|---|---|---|---|---|---|---|---|---|---|---|
| PA 6.10 | | 74 | | | | | | | | | |
| PA 6.12 | | | 72 | | | | | | | | |
| PA 10.10 | | | | 74 | | | | | | | |
| PA 10.12 | | | | | 74 | 37 | | | | | |
| PA 12 | | | | | | 37 | | 74 | 74 | 75 | 76,5 |
| PA 12/6 | | | | | | | 74 | | | | |
| Fyrolflex Sol DP | Phosphat | | | | 5 | | | 5 | | 5 | |
| ADK STAB FP-600 | Phosphat | 5 | | | | 5 | | | 5 | | 10 |
| Fyrolflex RDP | Phosphat | | 5 | | | | | | | | |
| Disflamoll DPK | Phosphat | | | | | | 5 | | | | |
| AFLAMMIT PCO 900 | Phosphonat | | | 5 | | 5 | | 5 5 | | | |
| Amgard CU | Phosphonat | 5 | | | 5 | | | | | | |
| Nofia HM7000 | Phosphonat | | 5 | | | | 5 | 5 | | 5 | |
| MC | | 10 | 10 | 10 | 10 | 10 | 10 | 5 | 10 | 10 | 10 |
| Dipentaerythrit | | 5 | 5 | 5 | 5 | 5 | 5 | 5 | 5 | 5 | 3,5 |
| Stabilisator-Mischung | | 1 | 3 | 1 | 0 | 0 | 1 | 6 | 6 | 0 | 0 |

**Tabelle 1: cont.**

| | | Ex 11 | Ex 12 | Ex 13 | **Ex 14** | Ex 15 | Ex 16 | Ex 17 | **Ex 18** | Ex 19 |
|---|---|---|---|---|---|---|---|---|---|---|
| PA 6.10 | | | | | | | | | | |
| PA 6.12 | | | | | | | | | | |
| PA 10.10 | | | | | | | | | | |
| PA 10.12 | | | | | | | | | | |
| PA 12 | | 74,5 | 78,5 | 73,5 | 74 | 74 | 74 | 74 | 74 | 74 |
| PA 12/6 | | | | | | | | | | |
| Fyrolflex Sol DP | Phosphat | 7,5 | 5 | | | 5 | | 8 | 2 | |
| ADK STAB FP-600 | Phosphat | | | | | | | | | 5 |
| Fyrolflex RDP | Phosphat | | | | 5 | | 5 | | | |
| Disflamoll DPK | Phosphat | | | | | | 5 | | | |
| AFLAMMIT PCO 900 | Phosphonat | | | | | 5 | | | | |
| Amgard CU | Phosphonat | | | | | | | | | |
| Nofia HM7000 | Phosphonat | | | 10 | 5 | | | 2 | 8 | 5 |
| MC | | 10 | 10 | 10 | 10 | 10 | 10 | 10 | 10 | 10 |
| Dipentaerythrit | | 5 | 3,5 | 3,5 | 5 | 5 | 5 | 5 | 5 | 5 |
| Stabilisator-Mischung | | 3 | 3 | 3 | 1 | 1 | 1 | 1 | 1 | 1 |

| | | | | | | | | | | |
|---|---|---|---|---|---|---|---|---|---|---|
| Beispiele **Ex 2, Ex 7, Ex9, Ex 14 und Ex 18** sind erfindungsgemäß. | | | | | | | | | | |

Überraschenderweise zeigen die Beispiele, dass bei Verwendung der erfindungsgemäßen Arylphosphate der Masseverlust durch Migration gerade bei Verwendung von Arylphosphaten mit einer Phenylen-Gruppe niedriger ausfällt als bei Verwendung der höhermolekularen Arylphosphate mit 4,4'-(Propan-2,2-diyl)diphenylen-Gruppe.

Den Beispielen ist zu entnehmen, dass die gewünschten Eigenschaften in Bezug auf Flammschutz und Masseverlust durch Migration nur durch die Kombination von metallfreiem Arylphosphat und Aryl-phosphonat zu erreichen ist. Die Kombination von metallfreiem Arylphosphat mit Alkyl-phosphonaten ist in diesem Sinn nicht zielführend.

## Patentansprüche

1. Polyamid-Formmasse enthaltend:
(A) eine Polyamidmatrix enthaltend ein oder mehrere Polyamide mit mindestens 8 Kohlenstoffen pro Amideinheit
(B) eine Flammschutzmittelzusammensetzung, enthaltend:
(B1) wenigstens ein metallfreies Arylphosphat;
(B2) wenigstens ein Arylphosphonat;
(B3) einem Carbo-Polyalkohol;
(B4) Melamincyanurat,
(B5) optional, nicht phosphorhaltige Flammschutzmittel,
wobei der Gehalt an Phosphor aus der gesamten Flammschutzmittelzusammensetzung 0,5 bis 1,5 Gew.-% bezogen auf die Polyamid-Formmasse beträgt.

2. Polyamid-Formmasse nach Anspruch 1, wobei die Polyamide ausgewählt sind aus PA 8, PA 9, PA 10, PA 11, PA 12, PA 6.10, PA 6.12, PA 6.14, PA 8.10, PA 9.10, PA 9.12, PA 10.10, PA 10.12, PA 12.12, PA 6.16, PA 10.16.

3. Polyamid-Formmasse nach einem der vorhergehenden Ansprüche, wobei das Masseverhältnis von (B1) zu (B2) gleich 0,25 bis 4 beträgt, bevorzugt 0,33 bis 3, mehr bevorzugt 0,5 bis 2, insbesondere bevorzugt 0,75 bis 1,5.

4. Polyamid-Formmasse nach einem der vorhergehenden Ansprüche, wobei das metallfreie Arylphosphat (B1) mindestens eine Einheit der Formel (I), bevorzugt 1 bis 2 dieser Einheiten 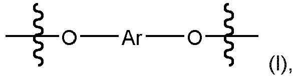 und mindestens zwei Einheiten, bevorzugt zwei bis drei, der Formel (II), 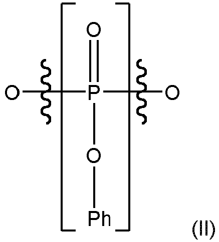 aufweist,
wobei die Einheiten der Formeln (I) und (II) alternierend vorliegen,
wobei die Anzahl der Einheiten nach Formel (II) immer um 1 größer ist als die der Formel (I),
wobei Ar für ortho-, meta-, para- Phenylen; Naphtylen, Biphenylen steht,
wobei Ph für einen Phenylrest, optional beliebig mit C1 bis C4 Alkyl-Resten substituiert, steht.

5. Polyamid-Formmasse nach einem der vorhergehenden Ansprüche, wobei das Arylphosphonat (B2) die Wiederholungseinheit nach Formel (III) aufweist 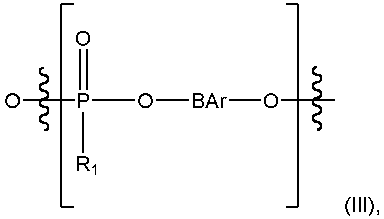
wobei R1 für einen Alkylrest mit 1 bis 4 Kohlenstoffatomen steht und
BAr jeweils unabhängig voneinander für einen aromatischen Rest steht, bevorzugt für einen mindestens zweikernigen aromatischen Rest, mehr bevorzugt Biphenylen oder 4,4'-(Propan-2,2-diyl)diphenylen.

6. Verwendung einer Polyamid-Formmasse nach einem der vorhergehenden Ansprüche zur Herstellung eines Bauteiles.

7. Verfahren zur Isolierung von stromführenden Bauteilen dadurch charakterisiert, dass die Polyamid-Formmasse gemäß einem der Ansprüche 1 bis 5 in einem Extrusions- oder Extrusionsblasverfahren, einem Spritzgussverfahren oder einem Hinterspritzen zum Bauteil geformt wird.

8. Hybridbauteil enthaltend einen beschichteten Metallkörper, wobei die Beschichtung eine Polyamid-Formmasse aufweist, enthaltend:
(A) eine Polyamidmatrix enthaltend ein oder mehrere Polyamide mit mindestens 8 Kohlenstoffen pro Amideinheit
(B) eine Flammschutzmittelzusammensetzung, enthaltend:
(B1) wenigstens einem metallfreien Arylphosphat;
(B2) wenigstens einem Arylphosphonat;
(B3) einem Carbo-Polyalkohol;
(B4) Melamincyanurat;
(B5) optional nicht phosphorhaltige Flammschutzmittel,
wobei der Gehalt an Phosphor aus der gesamten Flammschutzmittelzusammensetzung 0,5 bis 1,5 Gew.-% bezogen auf die Polyamid-Formmasse beträgt.

9. Verwendung der Hybridbauteile nach Anspruch 7 zur Übertragung von elektrischem Strom.

## Claims

1. Polyamide moulding compound comprising:
(A) a polyamide matrix comprising one or more polyamides having at least 8 carbon atoms per amide unit,
(B) a flame retardant composition comprising:
(B1) at least one metal-free aryl phosphate,
(B2) at least one aryl phosphonate,
(B3) a carbohydrate polyol,
(B4) melamine cyanurate,
(B5) optionally, non-phosphorus-containing flame retardants,
wherein the content of phosphorus from the entire flame retardant composition is 0.5% to 1.5% by weight based on the polyamide moulding compound.

2. Polyamide moulding compound according to Claim 1, wherein the polyamides are selected from PA 8, PA 9, PA 10, PA 11, PA 12, PA 6.10, PA 6.12, PA 6.14, PA 8.10, PA 9.10, PA 9.12, PA 10.10, PA 10.12, PA 12.12, PA 6.16 and PA 10.16.

3. Polyamide moulding compound according to either of the preceding claims, wherein the mass ratio of (B1) to (B2) is 0.25 to 4, preferably 0.33 to 3, more preferably 0.5 to 2, particularly preferably 0.75 to 1.5.

4. Polyamide moulding compound according to any of the preceding claims, wherein the metal-free aryl phosphate (B1) contains at least one unit of formula (I), preferably 1 or 2 of said units 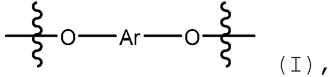
and at least two units, preferably two or three units, of formula (II), 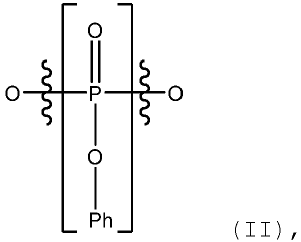
wherein the units of formula (I) or (II) are present in alternation,
wherein the number of units according to formula (II) is always 1 greater than the number of formula (I),
where Ar is ortho-, meta-, para-phenylene, naphthylene or biphenylene,
where Ph is a phenyl radical, optionally having any desired substitution with C1 to C4 alkyl radicals.

5. Polyamide moulding compound according to any of the preceding claims, wherein the aryl phosphonate (B2) contains the repeat unit shown in formula (III) 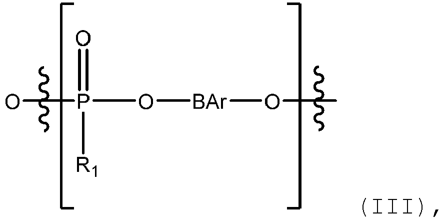
where R1 is an alkyl radical having 1 to 4 carbon atoms and
BAr is in each case independently an aromatic radical, preferably an aromatic radical having at least two rings, more preferably biphenylene or 4,4'-(propane-2,2-diyl)diphenylene.

6. Use of a polyamide moulding compound according to any of the preceding claims for the production of a component.

7. Process for insulating current-bearing components **characterized in that** the polyamide moulding compound according to any of Claims 1 to 5 is formed into the component in an extrusion process or blow extrusion process, an injection-moulding process or an insert moulding.

8. Hybrid component comprising a coated metal body, wherein the coating comprises a polyamide moulding compound comprising:
(A) a polyamide matrix comprising one or more polyamides having at least 8 carbon atoms per amide unit,
(B) a flame retardant composition comprising:
(B1) at least one metal-free aryl phosphate,
(B2) at least one aryl phosphonate,
(B3) a carbohydrate polyol,
(B4) melamine cyanurate,
(B5) optionally, non-phosphorus-containing flame retardants,
wherein the content of phosphorus from the entire flame retardant composition is 0.5% to 1.5% by weight based on the polyamide moulding compound.

9. Use of the hybrid components according to Claim 8 for the transmission of electric current.

## Revendications

1. Masse de moulage à base de polyamide, contenant :
(A) une matrice polyamide contenant un ou plusieurs polyamides comprenant au moins 8 atomes de carbone par motif amide
(B) une composition d'agent ignifuge, contenant :
(B1) au moins un phosphate d'aryle exempt de métal ;
(B2) au moins un phosphonate d'aryle ;
(B3) un carbo-polyalcool ;
(B4) du cyanurate de mélamine,
(B5) éventuellement des agents ignifuges non phosphorés,
la teneur en phosphore de la composition d'agent ignifuge totale représentant 0,5 à 1,5 % en poids, par rapport à la masse de moulage à base de polyamide.

2. Masse de moulage à base de polyamide selon la revendication 1, les polyamides étant choisis parmi PA 8, PA 9, PA 10, PA 11, PA 12, PA 6.10, PA 6.12, PA 6.14, PA 8.10, PA 9.10, PA 9.12, PA 10.10, PA 10.12, PA 12.12, PA 6.16, PA 10.16.

3. Masse de moulage à base de polyamide selon l'une des revendications précédentes, le rapport massique de (B1) à (B2) valant 0,25 à 4, de préférence 0,33 à 3, plus préférablement 0,5 à 2, en particulier de préférence 0,75 à 1,5.

4. Masse de moulage à base de polyamide selon l'une des revendications précédentes, le phosphate d'aryle exempt de métal (B1) présentant au moins un motif de formule (I), de préférence 1 à 2 de ces motifs 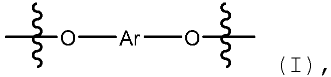
et au moins deux motifs, de préférence deux à trois motifs de formule (II), 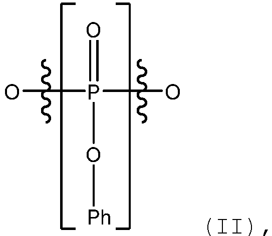
les motifs des formules (I) et (II) se trouvant en alternance,
le nombre de motifs selon la formule (II) étant toujours supérieur de 1 à celui selon formule (I),
Ar représentant ortho-phénylène, méta-phénylène, para-phénylène ; naphtylène, biphénylène,
Ph représentant un radical phényle, éventuellement substitué de manière quelconque par des radicaux alkyle en C1 à C4.

5. Masse de moulage à base de polyamide selon l'une des revendications précédentes, le phosphonate d'aryle (B2) présentant le motif récurrent selon la formule (III) 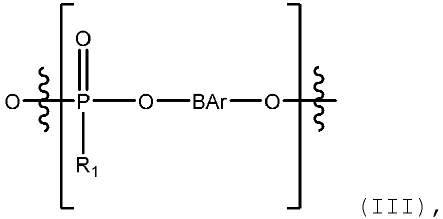
dans laquelle R1 représente un radical alkyle comprenant 1 à 4 atomes de carbone et
BAr représente, à chaque fois indépendamment, un radical aromatique, de préférence un radical aromatique au moins à deux noyaux, plus préférablement le biphénylène ou le 4,4'-(propane-2,2-diyl)diphénylène.

6. Utilisation d'une masse de moulage à base de polyamide selon l'une des revendications précédentes pour la fabrication d'un composant.

7. Procédé d'isolation de composants électroconducteurs, **caractérisé en ce que** la masse de moulage à base de polyamide selon l'une des revendications 1 à 5 est moulée en composant dans un procédé d'extrusion ou d'extrusion-soufflage, un procédé de moulage par injection ou un procédé de surmoulage.

8. Composant hybride, contenant un corps métallique revêtu, le revêtement présentant une masse de moulage à base de polyamide, contenant :
(A) une matrice polyamide contenant un ou plusieurs polyamides comprenant au moins 8 atomes de carbone par motif amide
(B) une composition d'agent ignifuge, contenant :
(B1) au moins un phosphate d'aryle exempt de métal ;
(B2) au moins un phosphonate d'aryle ;
(B3) un carbo-polyalcool ;
(B4) du cyanurate de mélamine ;
(B5) éventuellement des agents ignifuges non phosphorés,
la teneur en phosphore de la composition d'agent ignifuge totale représentant 0,5 à 1,5 % en poids, par rapport à la masse de moulage à base de polyamide.

9. Utilisation des composants hybrides selon la revendication 8 pour la transmission d'un courant électrique.
